Europäisches Patentamt

**European Patent Office**

**Office européen des brevets**

(11) Numéro de publication: **0 128 086**
**B1**

(12) **FASCICULE DE BREVET EUROPÉEN**

(45) Date de publication du fascicule du brevet: 21.03.90

(21) Numéro de dépôt: 84401089.2

(22) Date de dépôt: 28.05.84

(51) Int. Cl. ⁵: **B 60 R 13/06, B 60 J 1/17**

(54) Vitrage, en particulier vitrage pour véhicule automobile garni d'une lisière métallique collée.

(30) Priorité: 03.06.83 DE 3320157

(43) Date de publication de la demande:
12.12.84 Bulletin 84/50

(45) Mention de la délivrance du brevet:
21.03.90 Bulletin 90/12

(84) Etats contractants désignés:
AT BE CH DE FR GB IT LI LU NL SE

(56) Documents cité:
EP-A-0 083 696
CH-A-186 768
DE-B-2 838 447
FR-A-441 229
GB-A-2 093 106

(73) Titulaire: **SAINT-GOBAIN VITRAGE INTERNATIONAL**
**18, avenue d'Alsace**
**F-92400 Courbevoie (FR)**
(84) Etats contractants désignés: **BE CH FR GB IT LI LU NL SE AT**

(73) Titulaire: **VEGLA Vereinigte Glaswerke GmbH**
**Viktoriaallee 3-5**
**D-5100 Aachen (DE)**
(84) Etats contractants désignés: **DE**

(72) Inventeur: **Kunert, Heinz**
**Am Krieler Dom 23**
**D-5000 Koln (DE)**

(74) Mandataire: **Muller, René**
**SAINT-GOBAIN RECHERCHE 39, quai Lucien Lefranc**
**F-93304 Aubervilliers (FR)**

LIBERGRAF, STOCKHOLM 1990

2

## Description

L'invention concerne un vitrage pourvu de garnitures métalliques fixées au vitrage par collage comme il est défini dans le préambule de là revendication 1. Elle concerne plus précisément un vitrage pour véhicule automobile auquel sont collées des lisières qui assurent le maintien ou le guidage dudit vitrage dans la carrosserie du véhicule. On peut citer par exemple des vitres coulissantes pour les portières de véhicules.

Il est connu par le document CH-A-186 768 de maintenir un vitrage par la tranche dans un profilé en forme de U. Pour améliorer le fixage, le vitrage est maintenu entre les deux bords du profilé, munis de rainures, par l'intermédiaire de mastic.

On tend de plus en plus actuellement à s'affranchir dans les automobiles des effets de la résistance de l'air. A cette fin, il est connu d'encastrer les vitrages, notamment les vitrages latéraux, dans les carrosseries de véhicules, de façon à ce que leur surface extérieure soit exactement à fleur de carrosserie. Ceci implique que les vitrages ne peuvent plus être maintenus par leur tranche dans des profilés métalliques en U. La présence de ces profilés donne lieu à des protubérances indésirables contribuant à sa mauvaise résistance à l'air. On a recours actuellement à des systèmes de fixation du vitrage à la carrosserie qui ne forment aucune protubérance à la surface extérieure du vitrage. Parmi les systèmes possible, on a envisagé la fixation par collage, selon laquelle toutes les parties métalliques nécessaires au bon fonctionnement du vitrage, telles que les profilés de maintien, de guidage ou autres, sont directement collés à la surface du verre tournée vers l'intérieur de l'habitacle du véhicule.

La réalisation de liaisons durables entre les vitrages et des lisières métalliques fixées par collage pose des problèmes considérables. Une des difficultés fréquemment rencontrées réside dans le fait qu'en règle générale, les masses adhésives utilisées à cet effet présentent, vis à vis de la surface métallique d'une part, et du verre d'autre part, des capacités d'adhérence fort variables. Ainsi il existe des masses adhésives qui, généralement après intercalation d'un primaire d'adhérence, possédent une force d'adhérence au verre considérable, tout comme il en existe d'autres qui adhèrent parfaitement bien au métal utilisé. Toutefois, on ne connaît pas jusqu'à présent, pour ce type d'application, des colles parfaitement appropriées, qui sont susceptibles d'adhérer parfaitement aussi bien à la surface du verre qu'à la surface du métal.

Pour les raisons précédemment évoquées, on s'est déjà proposé, par exemple dans le brevet allemand DE PS-2 731 100, de garnir des éléments de maintien métalliques, sur leur surface destinée à être collée sur la surface du verre, d'un revêtement en émail ou d'un vernis. Par cette méthode, on prête à la surface métallique des propriétés comparables à celle d'une surface en verre. On peut alors utiliser des colles qui présentent une capacité d'adhérence vis à vis du verre particulièrement bonne.

L'invention a pour but de fournir des moyens permettant d'obtenir une liaison par collage qui soit durable entre des éléments métalliques et des vitrages maintenus en position à l'aide desdits éléments métalliques. La liaison ainsi réalisée doit être capable de résister de façon durable, par exemple aux forces qui s'exercent sur les éléments de maintien d'un vitrage pour véhicule, dans le cas d'une vitre coulissante.

Les vitrages, selon l'invention, sont constitués d'une feuille de verre munie d'un élément métallique de maintien ou de guidage fixé par collage à l'aide d'une masse adhésive et dont la surface en contact avec la masse adhésive est supérieure à la surface de contact entre la feuille de verre et ladite masse adhésive. Ils sont caractérisés en ce que l'élément métallique (6, 12, 18, 28, 36) en contact avec la masse adhésive est pourvue de perforations (10, 16, 23) produisant un ancrage supplémentaire de la masse adhésive (11) avec l'élément métallique de maintien ou de guidage et en ce que la surface de contact entre la masse adhésive et l'élément métallique de maintien ou de guidage est au moins deux fois plus grande que la surface de contact entre la masse adhésive et la feuille de verre.

L'invention autorise en outre l'utilisation d'une masse adhésive qui présente une bonne adhérence au verre, et une adhérence moindre au métal.

Suivant une caractéristique de l'invention, le domaine des lisières métalliques en contact avec la masse adhésive est garni de découpes, de nervures, ou d'évidements qui accroissent la surface métallique du côté de la lisière tourné vers le verre et donc en contact avec la masse adhésive.

L'importance de la surface de contact entre la colle et le métal est déterminante pour l'obtention de l'adhérence souhaitée, mais ce résultat procure des avantages supplémentaires. Par la présence de nervures dans l'élément de maintien, on obtient non seulement une amélioration de l'adhérence, mais également un ancrage mécanique entre la masse adhésive et l'élément de maintien. En outre, l'augmentation de surface de l'élément de maintien dans la zone de collage conduit à une augmentation de la capacité de déformation plastique dudit élément dans cette zone, ce qui fait que cette partie épouse davantage la surface du verre au cours du collage. De plus, par l'accroissement nécessaire du volume de la masse adhésive à utiliser, la liaison par collage a une élasticité plus élevée ce qui, en raison des perpétuelles vibrations auxquelles sont soumises ces liaisons dans les véhicules, est particulièrement avantageux. Enfin, les nervures et découpes pratiquées dans l'élément de maintien contribuent d'une part à améliorer sa fixation grâce à la pénétration de la masse adhésive; d'autre part, dans la mesure où, selon un mode avantageux de l'invention, l'élément ou lisière de maintien est pourvu, sur la partie en contact avec la masse adhésive, de perforations, lesdites perforations permettent une mise en contact entre la masse adhésive et l'atmosphère environnante. Ce mode de réalisation est particulièrement intéressant pour accélérer le durcissement de la colle.

Des modes de réalisation de l'invention apparaîtront au cours de la description suivante, en relation avec les figures 1 à 5, qui sont des coupes partielles en perspective:

- la figure 1 représente une vitre coulissante de portière de véhicule automobile avec une lisière de maintien plane faisant saillie latéralement;
- la figure 2 représente également une vitre coulissante de portière de véhicule automobile avec une baguette de maintien profilée en U disposée sur le côté;
- la figure 3 représente le même type de vitres avec une baguette de maintien profilée en Z;
- les figures 4 et 5 illustrent deux autres modes de réalisation, dans lesquels des pièces intermédiaires sont disposées entre le vitrage et la baguette de maintien proprement dite.

La feuille de verre 1 est une feuille de verre bombée en un verre trempé destinée à servir de fenêtre coulissante pour les portières de véhicules automobiles. La surface extérieure 2 de la feuille de verre 1 doit apparaître à fleur de carrosserie, c'est-à-dire qu'elle ne doit pas faire saillie au delà de la partie adjacente de la carrosserie. C'est pourquoi, on applique sur la surface 3 de la feuille de verre 1 tournée vers l'intérieur de l'habitacle du véhicule, le long des bords verticaux 4, des lisières de maintien ou de guidage généralement métalliques. Ces lisières de guidage présentent, derrière la surface 3 des feuilles de verre, et dirigées vers le cadre de la fenêtre, des languettes de fixation, qui coopèrent avec des lisières de maintien ou de guidage correspondantes dans le cadre de fenêtre, de sorte que lesdites lisières de maintien ou de guidage placées dans le cadre de fenêtre ne débordent pas sur la surface intérieure 2 de la feuille de verre.

Pour réaliser selon l'invention, le collage des lisières de maintien ou de guidage avec la surface 3 de la feuille de verre 1, on utilise en principe des colles qui présentent une remarquable capacité d'adhérence au verre. On connaît en particulier des masses adhésives à base de polyuréthane à un composant, qui durcissent sous l'influence de l'humidité de l'air, et qui sont par exemple décrites dans le brevet américain US-A-3 779 794. Notamment après avoir au préalable appliqué sur la surface du verre un primaire d'adhérence approprié, ces masses adhésives ont un pouvoir d'adhérence extrêmement élevée vis-à-vis du verre, tandis que vis-à-vis des métaux usuellement utilisés pour les lisières de maintien et de guidage, le pouvoir d'adhérence est nettement plus bas.

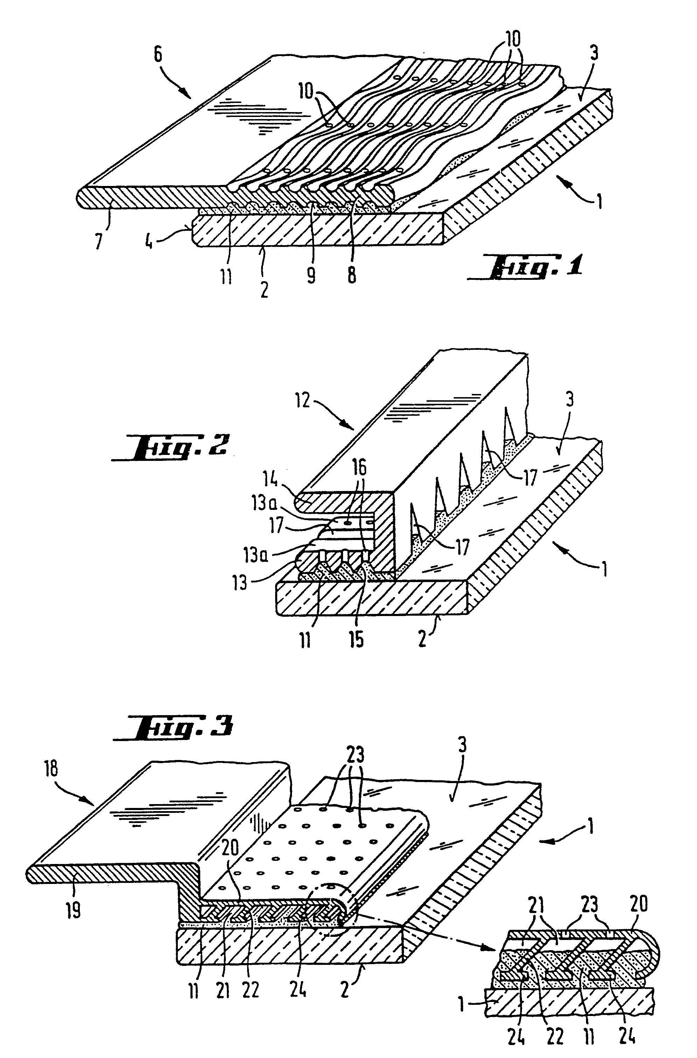

Dans la forme de réalisation représentée à la figure 1, la lisière de guidage 6 collée à la feuille de verre 1 consiste en une forme plane comprenant deux sections 7 et 8 de formes différentes. La section 7 est la partie qui constitue la baguette de maintien proprement dite, et elle présente des surfaces planes. La section 8 sert au collage avec la surface 3 de la feuille de verre. Dans le sens longitudinal, elle a un profilé de tôle ondulée. Grâce à cette conformation, on peut obtenir, avec des feuilles de verre bombées, une adaptation plus facile de la lisière de guidage 6 au contour de la feuille de verre bombée. Les surfaces de la section 8 présentent également un cannelage longitudinal et des perforations 10. La cannelure 9 a une conformation telle que toute la surface de la section 8 qui se trouve en contact avec la masse adhésive 11 est au moins le double de la zone de surface de la feuille de verre 1 recouverte de colle. Les perforations 10 servent à un ancrage supplémentaire de la masse adhésive 11 dans la section 8. La lisière de guidage 6 telle qu'elle est représentée présente également une cannelure sur la face de la section 8 opposée au vitrage, mais il va de soi qu'une telle cannelure n'est pas du tout indispensable et que l'objectif de l'invention est atteint même si seule la surface en contact avec la masse adhésive 11 est garnie d'une cannelure.

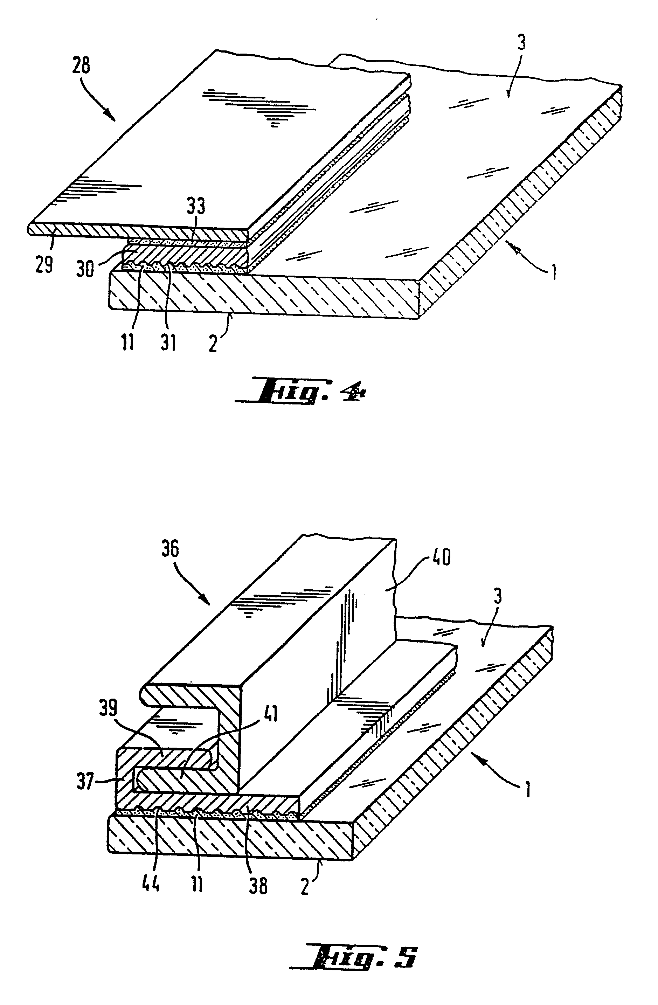

Sur la figure 2, on a représenté une lisière de maintien ou de guidage 12 qui consiste en une lisière profilée en U, dont la branche 13 est collée à la surface de la feuille de verre 1 et la branche 14 sert à elle-seule de saillie de fixation laquelle est saisie, à l'arrière du vitrage, par une lisière de maintien disposée dans le cadre de fenêtre. La branche 13 de la lisière 12 profilée en U consiste en des sections distinctes 13a séparées par des évidements 17. De tels évidements se retrouvent, sous forme de découpe en V, dans l'aile qui constitue la base du U et relie les deux branches 13 et 14. Grâce à une telle conformation de la lisière de guidage 12, sa capacité de déformation se trouve accrue, de sorte qu'elle s'adapte plus aisément au contour d'une feuille de verre bombée.

Le côté extérieur de la branche 13 est garni de rainures longitudinales 15 dont le nombre et la largeur, le cas échéant la profondeur, sont déterminées de façon à ce que la surface qui se trouve en contact avec la masse adhésive 11 soit à peu près le double de la surface plane supérieure. La branche 13 contient également un grand nombre de perforations 16. La masse adhésive 11 pénètre partiellement dans lesdites perforations, de sorte que l'adhérence s'en trouve encore accrue, et que l'on obtient un ancrage supplémentaire dans cette première étape du procédé d'assemblage. En particulier ces perforations interviennent pour favoriser la diffusion des molécules de vapeur d'eau de l'air atmosphérique vers la masse adhésive, si bien qu'on raccourcit le temps de prise d'une colle durcissable à l'humidité.

Dans la figure 3, la lisière représentée consiste en un profil en forme de Z, dont l'aile en saillie 19 sert d'aile de maintien proprement dite et dont l'aile 20 est collée à la surface 3 de la feuille de verre 1 par l'intermédiaire de la masse adhésive 11. L'aile 20 possède une structure creuse, et notamment, une série de canaux longitudinaux 21 et des languettes 22 profilées en T du côté dirigé vers la surface du verre. La masse adhésive 21 pénètre entre les languettes 22 dans les canaux 21. Lesdits canaux sont, par l'intermédiaire des trous 23, en contact avec l'air environnant. Les languettes 22 comportent latéralement des saillies d'ancrage 24 qui assurent une fixation particulièrement avantageuse de la masse adhésive 11 dans les canaux 21.

Sur la figure 4, on a représenté une lisière 28 en deux parties, dont l'une est un plan 29 formant la lisière de maintien proprement dite et l'autre est un plan plus petit 30, qui sert d'élément de liaison entre la surface 3 du verre et le plan 29. Le plan 30, est garni de cannelures longitudinales 31 sur la surface assemblée à la feuille de verre 1. Lesdites cannelures servent à accroître la surface active. On colle avantageusement le plan 30 sur le vitrage 1 dans l'atelier de fabrication du vitrage, à l'aide de la masse adhésive 11, qui est par exemple un polyuréthane à un composant qui durcit à l'humidité de l'air. Le plan 30 peut aussi être pourvu de trous qui accélèrent le processus d'assemblage.

On colle sur ce profil intermédiaire 30, avantageusement dans l'atelier de fabrication du véhicule, la surface plane 29 à l'aide d'une masse adhésive 33. La composition de la masse adhésive 33 se différencie de celle de la masse adhésive 11, notamment, elle doit être compatible avec le métal employé pour les plans 29 et 30. Toutefois, ces deux plans peuvent être assemblés par un autre moyen, notamment par soudure.

La forme de réalisation représentée à la figure 5 fait également apparaître une lisière de maintien ou de guidage en deux parties, une première partie 37 profilée en U et une deuxième partie 40 également profilée en U. L'une des branches 38 du profilé 37 est collée à la surface 3 de la feuille de verre 1 à l'aide d'une masse adhésive 11. La distance entre les deux branches 38 et 39 du U du profilé 37 correspond à l'épaisseur d'une branche 41 du profilé 40, ladite branche étant assemblée au profilé 37 par simple emboîtement et pincement. La fixation du profilé 37 à la surface 3 du verre se fait avantageusement dans l'atelier de fabrication de la feuille de verre, par exemple à l'aide d'une masse adhésive 11. Pour accroître l'adhérence de la masse adhésive 11 au profilé en U 37, la branche 38 dudit profilé est garnie de cannelures longitudinales 44. Ultérieurement, dans l'atelier d'assemblage du véhicule, on insère à force le profil en U 40 dans le profilé en U 37.

**Revendications**

1. Feuille de verre (1) munie d'un élément métallique de maintien ou de guidage (6, 12, 18, 28, 36) fixé par collage à l'aide d'une masse adhésive (11) et dont la surface en contact avec la masse adhésive (11) est supérieure à la surface de contact entre la feuille de verre (1) et ladite masse adhésive (11), caractérisée en ce que l'élément métallique (6, 12, 18, 28, 36) en contact avec la masse adhésive (11) est pourvue de perforations (10, 16, 23) produisant un ancrage supplémentaire de la masse adhésive (11) avec l'élément métallique de maintien ou de guidage et en ce que la surface de contact entre la masse adhésive et l'élément métallique de maintien ou de guidage est au moins deux fois plus grande que la surface de contact entre la masse adhésive et la feuille de verre.

2. Feuille de verre conforme à la revendication 1, caractérisée en ce que l'élément de maintien ou de guidage (6, 12, 18, 28, 36) en contact avec la masse adhésive (11) est pourvue de découpes, de nervures ou d'évidements (9, 15, 21, 31, 44).

3. Feuille de verre, conforme à l'une des revendications 1 et 2, caractérisée en ce que la masse adhésive (11), fixant l'élément métallique de maintien ou de guidage à la surface de verre, est formée d'une composition de polyuréthane à un composant durcissable à l'humidité de l'air.

4. Feuille de verre conforme à l'une quelconque des revendications 1 à 3, caractérisée en ce que l'élément métallique de maintien ou de guidage (6, 12, 18, 28, 36) comprend une aile (13, 20) fixée par collage à la surface de verre par la masse adhésive.

5. Feuille de verre conforme à la revendication 4, caractérisée en ce que l'aile (20) en contact avec la masse adhésive (11) est garnie, du côté dirigé vers la surface du verre, de languettes (22) comportant une partie en saillie (24) servant d'élément d'ancrage pour la masse adhésive (11).

6. Feuille de verre conforme à l'une quelconque des revendications 1 à 3, caractérisée en ce que l'élément métallique de maintien ou de guidage (28, 36) est formé en deux parties, l'une étant un profilé (30, 37) collé à la surface (3) du verre et l'autre étant l'élément de maintien ou de guidage (29, 40) proprement dit lié audit profilé (30, 37).

7. Feuille de verre conforme à la revendication 6, caractérisée en ce que l'élément de maintien ou de guidage proprement dit (29) est collé au profilé (30).

8. Feuille de verre conforme à la revendication 6, caractérisée en ce que l'élément de maintien ou de guidage proprement dit (29) est soudé au profilé (30).

9. Feuille de verre conforme à la revendication 6, caractérisée en ce que le profilé (37) collé à la surface (3) du verre présente une section en U et en ce que l'élément de maintien ou de guidage (40) présente aussi une section en U, l'une des branches (41) de cet élément étant pincée entre les branches (38, 39) du profilé (37).

10. Feuille de verre conforme à l'une quelconque des revendications 1 à 9, caractérisée en ce qu'elle constitue un vitrage pour véhicule automobile.

11. Feuille de verre conforme à la revendication 10, caractérisée en ce que l'élément métallique de maintien ou de guidage fixé au vitrage est une lisière de maintien ou de guidage.

**Patentansprüche**

1. Glasscheibe (1) mit einem metallischen Halte- oder Führungselement (6, 12, 18, 28, 36), das durch Kleben mit Hilfe einer Klebemasse (11) befestigt ist und deren mit der Klebemasse (11) in Kontakt stehende Oberfläche größer ist als die Kontaktfläche zwischen der Glasscheibe (1) und der Klebemasse (11), *dadurch gekennzeichnet*, daß das mit der Klebemasse (11) in Kontakt stehende metallische Element (6, 12, 18, 28, 36) mit Duchbrechungen (10, 16, 23) versehen ist, die eine zusätzliche Verankerung der Klebemasse (11) mit dem metallischen Halte- oder Führungselement bewirken, und daß die Kontaktfläche zwischen der Klebemasse und dem metallischen Halte- oder Führungselement wenigstens doppelt so groß ist wie die Kontaktfläche zwischen der Klebemasse und der Glasscheibe.

2. Glasscheibe nach Anspruch 1, dadurch gekennzeichnet, daß das in Kontakt mit der Klebemasse (11) stehende Halte- oder Führungselement (6, 12, 18, 28, 36) vorstehende Teile, Rippen oder Vertiefungen (9, 15, 21, 31, 44) aufweist.

3. Glasscheibe nach Anspruch 1 oder 2, dadurch gekennzeichnet, daß die das metallische Halte- oder Führungselement mit der Glasoberfläche verbindende Klebemasse (11) aus einer unter dem Einfluß der Luftfeuchtigkeit härtenden Einkomponenten-Polyurethan-Zusammensetzung besteht.

4. Glasscheibe nach einem der Ansprüche 1 bis 3, dadurch gekennzeichnet, daß das metallische Halte- oder Führungselement (6, 12, 18, 28, 36) einen Steg (13, 20) umfaßt, der mittels der Klebemasse mit der Glasoberfläche verklebt ist.

5. Glasscheibe nach Anspruch 4, dadurch gekennzeichnet, daß der mit der Klebemasse (11) in Kontakt stehende Steg (20) auf der zur Glasoberfläche gerichteten Seite mit Leisten (22) versehen ist, die einen vorspringenden Teil (24) umfassen, der als Verankerungselement für die Klebemasse (11) dient.

6. Glasscheibe nach einem der Ansprüche 1 bis 3, dadurch gekennzeichnet, daß das metallische

Halte- oder Führungselement (28, 36) aus zwei Teilen besteht, von denen das eine ein mit der Glasoberfläche (3) verklebtes Profil (30, 37), und das andere das eigentliche Halte- oder Führungselement (29, 40) darstellt und mit dem Profil (30, 37) verbunden ist.

7. Glasscheibe nach Anspruch 6, dadurch gekennzeichnet, daß das eigentliche Halte- oder Führungselement (29) mit dem Profil (30) verklebt ist.

8. Glasscheibe nach Anspruch 6, dadurch gekennzeichnet, daß das eigentliche Halte- oder Führungselement (29) mit dem Profil (30) verschweißt ist.

9. Glasscheibe nach Anspruch 6, dadurch gekennzeichnet, daß das mit der Glasoberfläche (3) verklebte Profil (37) einen U-förmigen Querschnitt aufweist, und daß das Halte- oder Führungselement (40) ebenfalls einen U-förmigen Querschnitt aufweist, wobei der eine Schenkel (41) dieses Elements zwischen von Schenkeln (38, 39) des Profils (37) eingeklemmt ist.

10. Glasscheibe nach einem der Ansprüche 1 bis 9, dadurch gekennzeichnet, daß sie eine Fahrzeugverglasung darstellt.

11. Glasscheibe nach Anspruch 10, dadurch gekennzeichnet, daß auf der Glasscheibe befestigte metallische Halte- oder Führungselement eine Halte- oder Führungsleiste ist.

**Claims**

1. Glass sheet (1) provided with a metallic supporting or guiding element (6, 12, 18, 28, 36), fixed by bonding with the aid of an adhesive material (11) and whereof the surface in contact with the adhesive material (11) is larger than the contact surface between the glass sheet (1) and said adhesive material (11), characterized in that the metallic element (6, 12, 18, 28, 36) in contact with the adhesive material (11) is provided with perforations (10, 16, 23) producing a supplementary anchoring of the adhesive material (11) with the metallic supporting or guiding element and in that the contact surface between the adhesive material and the metallic supporting or guiding element is at least twice as large as the contact surface between the adhesive material and the glass sheet.

2. Glass sheet according to claim 1, characterized in that the supporting or guiding element (6, 12, 18, 28, 36) in contact with the adhesive material (11) is provided with cutouts, ribs or recesses (9, 15, 21, 31, 44).

3. Glass sheet according to either of the claims 1 and 2, characterized in that the adhesive material (11), fixing the metallic supporting or guiding element to the glass surface, is formed by a polyurethane composition having a component setting under atmospheric humidity.

4. Glass sheet according to any one of the claims 1 to 3, characterized in that the metallic supporting or guiding element (6, 12, 18, 28, 36) has a blade-like member (13, 20) fixed by bonding to the glass surface by the adhesive material.

5. Glass sheet according to claim 4, characterized in that the blade-like member (20) in contact with the adhesive material (11) is provided, on the side directed towards the glass surface, with tongues (22) having a projecting part (24) serving as an anchoring element for the adhesive material (11).

6. Glass sheet according to any one of the claims 1 to 3, characterized in that the metallic supporting or guiding element (28, 36) is formed from two parts, one being a section (30, 37) bonded to the glass surface (3) and the other the actual supporting or guiding element (29, 40) connected to said section (30, 37).

7. Glass sheet according to claim 6, characterized in that the actual supporting or guiding element (29 is bonded to section (30).

8. Glass sheet according to claim 6, characterized in that the actual supporting or guiding element (29) is welded to section (30).

9. Glass sheet according to claim 6, characterized in that the section (37) bonded to the glass surface (3) has a U-shaped cross-section and in that the supporting or guiding element (40) also has a U-shaped cross-section, one of the branches (41) of said element being gripped between the branches (38, 39) of section (37).

10. Glass sheet according to any one of the claims 1 to 9, characterized in that it forms a window for a car.

11. Glass sheet according to claim 10, characterized in that the metallic supporting or guiding element fixed to the window is a supporting or guiding border.

Fig. 1

Fig. 2

Fig. 3

**Fig. 4**

**Fig. 5**

3